(19) Europäisches Patentamt / European Patent Office / Office européen des brevets

(11) **EP 2 031 385 B1**

(12) **EUROPEAN PATENT SPECIFICATION**

(45) Date of publication and mention
of the grant of the patent:
**18.11.2015 Bulletin 2015/47**

(51) Int Cl.:
**G01N 29/04** (2006.01)

(21) Application number: **07745079.9**

(22) Date of filing: **12.06.2007**

(86) International application number:
**PCT/JP2007/061792**

(87) International publication number:
**WO 2007/145200 (21.12.2007 Gazette 2007/51)**

(54) **ULTRASONIC FLAW DETECTING METHOD, MANUFACTURING METHOD FOR WELDED STEEL PIPE, AND ULTRASONIC FLAW DETECTING APPARATUS**

ULTRASCHALL-FEHLERNACHWEISVERFAHREN, HERSTELLUNGSVERFAHREN FÜR GESCHWEISSTES STAHLROHR UND ULTRASCHALL-FEHLERNACHWEISVORRICHTUNG

PROCÉDÉ ET APPAREIL DE DÉTECTION DE DÉFAUT ULTRASONIQUE, PROCÉDÉ DE FABRICATION DE TUYAU EN ACIER SOUDÉ

(84) Designated Contracting States:
**DE FR GB IT**

(30) Priority: **13.06.2006 JP 2006163098**

(43) Date of publication of application:
**04.03.2009 Bulletin 2009/10**

(73) Proprietor: **Nippon Steel & Sumitomo Metal Corporation**
**Tokyo 100-8071 (JP)**

(72) Inventors:
• **YAMANO, Masaki**
  **Osaka-shi, Osaka 5410041 (JP)**
• **OKUBO, Hiroyuki**
  **Osaka-shi, Osaka 5410041 (JP)**
• **HORIKIRI, Takumi**
  **Osaka-shi, Osaka 5410041 (JP)**
• **NAGASE, Makoto**
  **Osaka-shi, Osaka 5410041 (JP)**

(74) Representative: **Jackson, Martin Peter**
**J A Kemp**
**14 South Square**
**Gray's Inn**
**London WC1R 5JJ (GB)**

(56) References cited:
| | |
|---|---|
| WO-A1-99/45378 | JP-A- 04 142 456 |
| JP-A- 58 171 663 | JP-A- 62 064 948 |
| JP-A- 63 290 957 | JP-A- 2002 071 648 |
| JP-A- 2003 344 366 | JP-A- 2006 047 026 |
| JP-B2- 3 729 044 | JP-B2- 3 744 444 |
| JP-B2- 02 053 746 | JP-B2- 05 084 464 |
| JP-B2- 07 069 309 | US-A- 5 804 730 |

• RAAD DE J A ET AL: "MECHANISED UT ON GIRTH WELDS DURING PIPELINE CONSTRUCTION - A MATURE ALTERNATIVE TO RADIOGRAPHY", INSIGHT (NON-DESTRUCTIVE TESTING AND CONDITION MONITORING), BRITISH INSTITUTE OF NON- DESTR. TEST., NORTHAMPTON, GB, vol. 40, no. 6, 1 June 1998 (1998-06-01), pages 435-438, XP008042820, ISSN: 1354-2575

**Description**

TECHNICAL FIELD

The present invention relates to an ultrasonic flaw detection method, and a method of manufacturing a welded steel pipe, and more specifically to an ultrasonic flaw detection method for detecting a flaw in a weld bead and its vicinity, and a method of manufacturing a welded steel pipe.

BACKGROUND ART

Welded steel pipes such as a UOE steel pipe have planar defects such as cracks and lack of penetration inside a weld bead in some cases. In order to detect such planar defects in a weld bead, ultrasonic flaw detection is carried out.

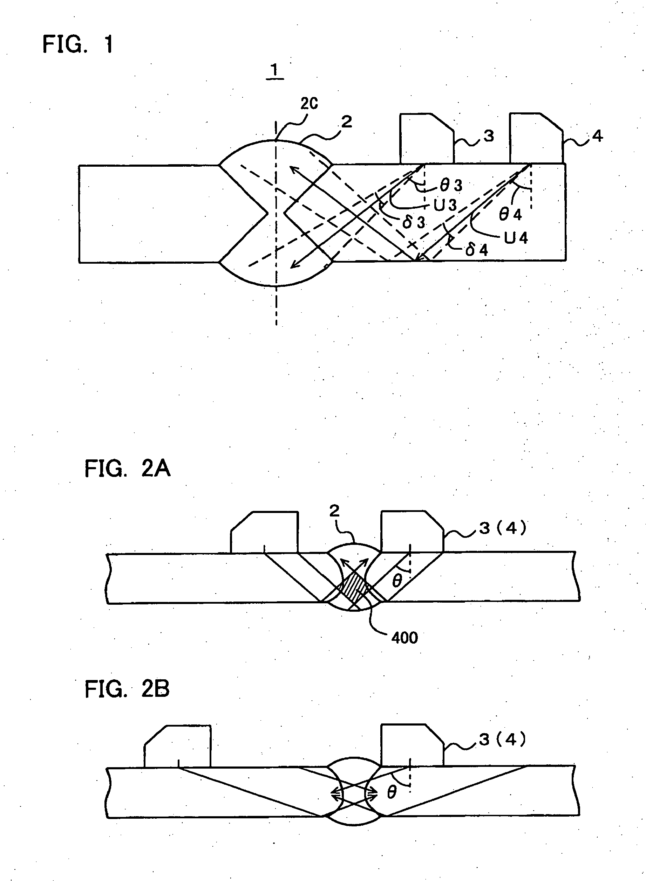

When a welded steel pipe is subjected to an ultrasonic flaw detection test, a plurality of probes are provided so that ultrasonic beams entirely cover the inside of a weld bead. Probes for detecting a lengthwise flaw (formed along the length of the weld bead) in a typical K form arrangement are as shown in Fig. 1.

The probe 3 is provided at 0.5 skip distance from the center 2C of a weld bead 2 and probes the weld bead 2 in the vicinity of the inner surface of the welded steel pipe 1. The probe 4 is provided at 1.0 skip distance from the center 2C and probes the weld bead in the vicinity of the outer surface of the welded steel pipe 1. Transverse ultrasonic beams U3 and U4 that are transmitted/received by the probes 3 and 4 propagate in the welded steel pipe 1 as they spread at directivity angles $\delta 3$ and $\delta 4$ that are determined by flaw detection frequencies, oscillator sizes and the like. Therefore, the ultrasonic beams U3 and U4 can cover the entire weld bead 2 by setting the refraction angles $\theta 3$ and $\theta 4$ of the probes 3 and 4 to appropriate values. As shown in Fig. 2A, in general, as the refraction angles $\theta$ of the probes 3 and 4 are smaller, it is more difficult to detect flaws in the central part of the weld bead 2, and an unprobed region 400 is generated in the weld bead 2. As shown in Fig. 2B, as the refraction angles $\theta$ increase, the unprobed region 400 can be suppressed and the inside of the weld bead 2 can entirely be covered. In order to cover the entire weld bead 2, a probe having a nominal refraction angle in the range from 55° to 70° is typically used to detect longitudinal flaws at a welded steel pipe having a thickness of 40 mm or less.

Critical flaws in welded steel pipes have been planar flaws such as the longitudinal flaws described above that are generated in a weld bead. However, as the strength of UOE steel pipes has improved recently, flaws generated at the toes of weld beads inside welded pipes (hereinafter referred to as "inner surface toe cracks") have produced a new problem.

The inner surface toe cracks at a UOE steel pipe are generated in the following manner. More specifically, during welding, an HAZ (heat affected zone) is softened and has strength lower than the base material in part. As the pipe is expanded after the welding, stress concentrated on the softened HAZ causes inner surface toe cracks. As the base has higher strength, the HAZ is more likely to be softened. As the UOE steel pipe has a smaller diameter and a larger thickness, stress is more likely to be concentrated during expanding. Therefore, a UOE steel pipe having high strength and a small thickness in particular such as those having a tensile strength of 600 MPa or more, an outer diameter from 500 mm to 1000 mm, and a thickness from about 15 mm to 40 mm have more inner surface toe cracks. It is difficult to detect the inner surface toe cracks using the conventional probes for detecting longitudinal flaws. If probes are provided at a skip distance from 1.0 to 1.5 in order to increase the ultrasonic flaw detection area, still the inner surface toe cracks are not easily detected.

Note that JP 2002-71648 A and JP 2003-262621 A are relevant patent documents. Relevant non-patent documents include ULTRASONIC FLAW DETECTION METHOD FOR WELDED STEEL PIPES, edited by Iron and Steel Institute of Japan, the quality control committee (NDI), pp. 60 to 62, Feb. 22, 1999.

WO 99/45378 discloses a method for detecting a fault of a weld seam.

DISCLOSURE OF THE INVENTION

It is an object of the present invention to provide an ultrasonic flaw detection method that can improve the capability of detecting inner surface toe cracks generated at toes of a weld bead at the inner surface of a welded steel pipe.

By the ultrasonic flaw detection method according to the invention, a welded steel pipe having a weld bead formed in the axial direction of the pipe is subjected to flaw detection by angle beam flaw detection. The ultrasonic flaw detection method according to the invention is an ultrasonic flaw detection method for detecting, in a UOE steel pipe having a base and a weld bead formed in the axial direction of the pipe, a toe crack extending inside the base from a toe of the weld bead inside the pipe, comprising the steps of: preparing a first probe that outputs a first transverse ultrasonic beam having a refraction angle of at least 40° and less than 55° when the ultrasonic beam enters from outside the UOE steel pipe; providing said first probe on the outer surface of said UOE steel pipe so that the propagation direction of said first transverse ultrasonic beam in said UOE steel pipe is approximately perpendicular to the lengthwise direction of said weld bead and said first transverse ultrasonic beam is propagated to a toe having a shorter distance to said first probe among both toes of the weld bead at the inner surface of said UOE steel pipe; outputting said first transverse ultrasonic beam from said provided first probe and subjecting said UOE steel pipe to flaw detection; and determining the presence/absence of the toe crack based on the result of flaw detection.

An inner surface toe crack extends as it is inclined from the toe of a weld bead at the inner surface of the welded steel pipe at 35° to 50° on the opposite side with respect to the radial direction. Therefore, the refraction angle of a transverse ultrasonic beam output from the first probe and coming into a weld toe closer to the first probe among the toes of the welded steel pipe is at least 40° and less than 55°, and the ultrasonic beam is incident to the inner surface toe crack approximately perpendicularly, so that a strong reflection echo can be obtained. In this way, the capability of detecting inner surface toe cracks is improved. In the providing step, the first probe is preferably provided at 0.5 skip distance from the toe having a shorter distance to the first probe.

When a toe at the inner surface of the welded steel pipe is subjected to ultrasonic flaw detection, the first probe is provided in the position at 0.5x(2n-1)(n: natural number) skip distance. If the skip distance is set to 0.5 skip distance, the beam path distance is minimized, and the focusing effect is maximized. Therefore, high echo intensity can be obtained for inner surface toe cracks smaller than the conventional planar flaws.

The ultrasonic flaw detection method according to the invention preferably further includes preparing a sample steel pipe having approximately the same cross sectional shape as that of said UOE steel pipe to be examined, a first drilled hole formed at the weld bead at the inner surface and a second drilled hole formed in the center of the weld bead at the inner surface; providing said first probe on the outer surface of said sample steel pipe so that the propagation direction of said first transverse ultrasonic beam in said sample steel pipe is approximately perpendicular to the lengthwise direction of said weld bead and said first transverse ultrasonic beam is incident to the first drilled hole formed at the toe having a shorter distance to said first probe among both toes of the weld bead at the inner surface of said sample steel pipe; subjecting said sample steel pipe to flaw detection using said provided first probe before subjecting said UOE steel pipe to be examined and obtaining a first time point when an echo of said first drilled hole is detected after said first probe outputs said first transverse ultrasonic beam and a second time point when an echo of said second drilled hole is detected; and when the UOE steel pipe to be examined is subjected to flaw detection, setting a monitor gate having a third time point that is prescribed time different from said first time point as a gate starting point and said second time point as a gate terminal point, wherein in said determining step, when the intensity of an echo in said monitor gate among echoes received by said first probe during the flaw detection of said UOE steel pipe to be examined exceeds a prescribed threshold, it is determined that the toe crack is detected.

When a toe of the weld bead at the inner surface of the welded steel pipe is subjected to ultrasonic flaw detection, a noise echo attributable to the shape of the weld bead (hereinafter referred to as "noise echo") is generated, and the noise echo can be over-detected as an echo of an inner surface toe crack. When one of the toes of the welded steel pipe is subjected to ultrasonic flaw detection, the bead-shaped noise echo is generated as it reflects at the inner surface of the welded steel pipe from the center of the weld bead to the other toe. Therefore, a monitor gate can be provided in a range without the reflection echo of the inner surface. According to the invention, a sample welded steel pipe having drilled holes each in the position of a toe to be examined and in the center of a weld bead is prepared, and before subjecting a welded steel pipe to be examined to flaw detection, the position of the toe (first time point) and the position of the center of the weld bead (second time point) are obtained by subjecting the sample welded steel pipe to be examined. Then, a monitor gate is set using the obtained center position of the weld bead as the gate terminal point. A bead-shaped noise echo is generated after the center of the weld bead, and therefore over-detection of the bead-shaped noise echo can be prevented by setting the monitor gate.

By setting the position a prescribed margin (prescribed time) separated from the position of the toe to be examined as the gate starting point, an echo of an inner surface toe crack can surely be included in the monitor gate. Therefore, the capability of detecting inner surface toe cracks can be improved by setting such a monitor gate.

The ultrasonic flaw detection method preferably further includes providing a second probe that outputs a second transverse ultrasonic beam having a refraction angle from 55° to 70° on the outer surface of said UOE steel pipe so that the propagation direction of said second transverse ultrasonic beam is approximately perpendicular to the lengthwise direction of said weld bead; directing said second transverse ultrasonic beam from said second probe into said UOE steel pipe and subjecting said weld bead to flaw detection; and determining the presence/absence of a longitudinal flaw formed in the lengthwise direction of said weld bead based on the result of flaw detection by said second probe.

In this way, not only inner surface toe cracks but also longitudinal flaws existing in the weld bead can be detected.

BRIEF DESCRIPTION OF THE DRAWINGS

Fig. 1 is a schematic view of the K form arrangement of probes according to conventional ultrasonic flaw detection for a welded steel pipe;

Fig. 2A is a schematic view for use in illustrating the relation between the refraction angle of a transverse ultrasonic beam and a flaw detection region in ultrasonic flaw detection;

Fig. 2B is another schematic view for use in illustrating the relation different from Fig. 2A between the refraction angle of a transverse ultrasonic beam and a flaw detection region in ultrasonic flaw detection;

Fig. 3 is a schematic view of an inner surface toe crack;

Fig. 4A is a view for use in illustrating a problem encountered in detecting an inner surface toe crack using a conventional probe;

Fig. 4B is another view for use in illustrating a problem different from Fig. 4A encountered in detecting an inner surface toe crack using a conventional probe;

Fig. 4C is another view for use in illustrating a problem different from Figs. 4A and 4B encountered in detecting an inner surface toe crack using a conventional probe;

Fig. 5 is a graph showing the relation between a refraction angle and the echo intensity of an inner surface toe crack;

Fig. 6 is a graph showing focusing effect relative to the focusing coefficient of a probe;

Fig. 7 is a top view of an ultrasonic flaw detector used by an ultrasonic flaw detection method according to the embodiment;

Fig. 8 is a sectional view taken along line VIII-VIII in Fig. 7;

Fig. 9 is a schematic view for use in illustrating the operation of a bead detector in Fig. 7;

Fig. 10 is a view of a weld bead detected by the bead detector in Fig. 7;

Fig. 11 is a view for use in illustrating the cause of a bead-shaped noise;

Fig. 12 is a flowchart showing the step of obtaining monitor gate data in order to set a monitor gate according to the embodiment;

Fig. 13 is a cross sectional view of a sample welded steel pipe used in step S1 in Fig. 12;

Fig. 14 is a table showing the data structure of a gate table to which data is registered in steps S2 and S3 in Fig. 12;

Fig. 15 is a graph showing echo signals obtained in step S2 by A-scope presentation;

Fig. 16 is a flowchart showing steps in the ultrasonic flaw detection method according to the embodiment;

Fig. 17 is a top view of an ultrasonic flaw detector used according to a second embodiment; and

Fig. 18 is a view of an array probe and a controller according to a third embodiment.

## BEST MODE FOR CARRYING OUT THE INVENTION

Now, an embodiment of the invention will be described in detail with reference to the accompanying drawings, in which the same or corresponding portions are designated by the same reference characters, and their description will not be repeated.

By an ultrasonic crack detection method according to the invention, a transverse ultrasonic beam with a refraction angle of at least 40° and less than 55° is propagated to a toe of a weld bead at the inner surface of a welded steel pipe. The refraction angle is at least 40° and less than 55° for the following reason.

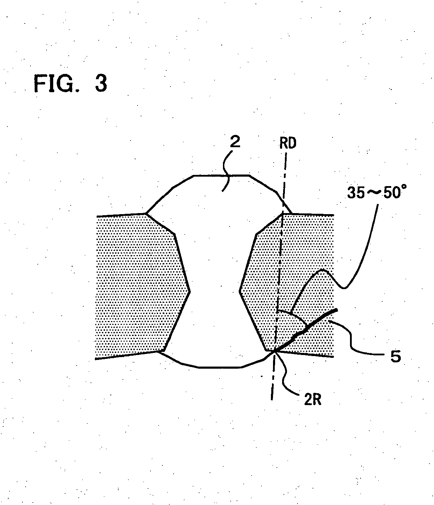

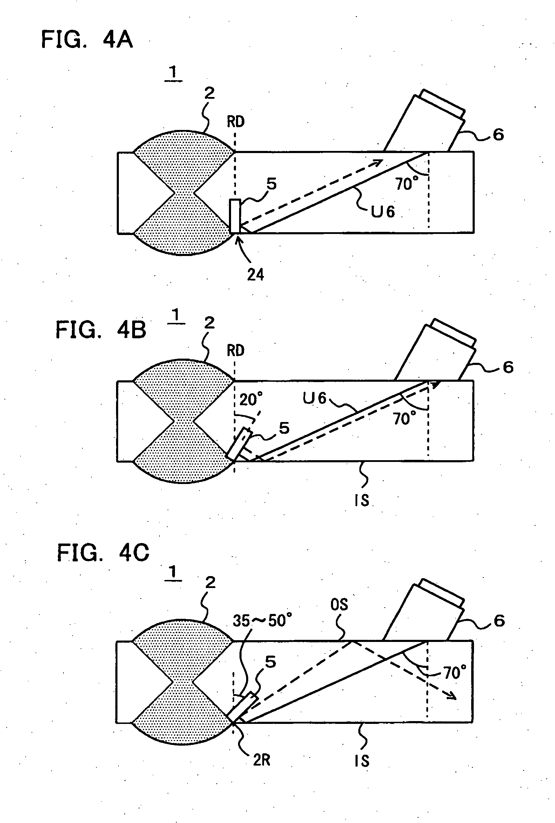

The inventors examined the states of a plurality of inner surface toe cracks. As a result, as shown in Fig. 3, an inner surface toe crack 5 generated at a UOE steel pipe having high strength, a small diameter, and a large thickness is inclined at 35° to 50° to the opposite side to the weld bead 2 with respect to the radial direction RD of the UOE steel pipe and extends inside the base from a toe 2R. The depth of the crack was about as short as 1 mm from the surface of the toe 2R. The crack inclined at 35° to 50° with respect to the radial direction is hardly detected by a conventional probe with a refraction angle from 55° to 70° for detecting a longitudinal flaw. As shown in Fig. 4A, when a typical conventional probe 6 with a nominal refraction angle of 70° is used to detect a conventional crack 5 along the radial direction RD (that corresponds to a longitudinal flaw), a transverse ultrasonic beam U6 incident into the UOE steel pipe 1 from the probe 6 is reflected once at the crack 5 as a reflection source and then received by the probe 6. Therefore, the probe 6 can detect the crack 5. Similarly, as shown in Fig. 4B, when the probe 6 detects a crack 5 inclined at 20° to the opposite side to the weld bead 2 with respect to the radial direction RD, the transverse ultrasonic beam U6 is reflected by the crack 5 and the inside surface IS of the UOE steel pipe 1, and then received by the probe 6. Therefore, the probe 6 can detect the crack 5.

However, as shown in Fig. 4C, when the probe 6 detects an inner surface toe crack 5 having an inclination angle in the range from 35° to 50°, the transverse ultrasonic beam U6 reflected at the inner surface toe crack 5 as the reflection source is reflected again at an outer surface OS before reaching the probe 6. Therefore, the probe 6 cannot receive the ultrasonic wave U6. It is therefore difficult for the conventional probe 6 to detect the inner surface toe crack 5.

The inventors probed for an inner surface toe crack by directing transverse ultrasonic beams with various refraction angles into the toes in order to examine a condition in which such an inner surface toe crack can be detected. More specifically, ultrasonic flaw detection tests were conducted using transverse ultrasonic beams with various refraction angles to inner surface toe cracks (cracks 1 to 3) inclined at 35° to 50° actually generated in a UOE steel pipe. At the time, a probe that outputs a transverse ultrasonic beam is provided at 0.5 skip distance from the position where an inner surface toe crack was generated (i. e., the toe at the inner surface of the UOE steel pipe). A drilled hole having a diameter of 1.6 mm was produced in the radial direction in the center of a weld bead, and ultrasonic flaw detection tests were conducted to the drilled hole using ultrasonic beams with various refraction angles. At the time, the probe was provided at 0.5 skip distance from the center of the weld bead. After the tests, the intensities of echoes of the inner surface toe cracks were compared among the various refraction angles.

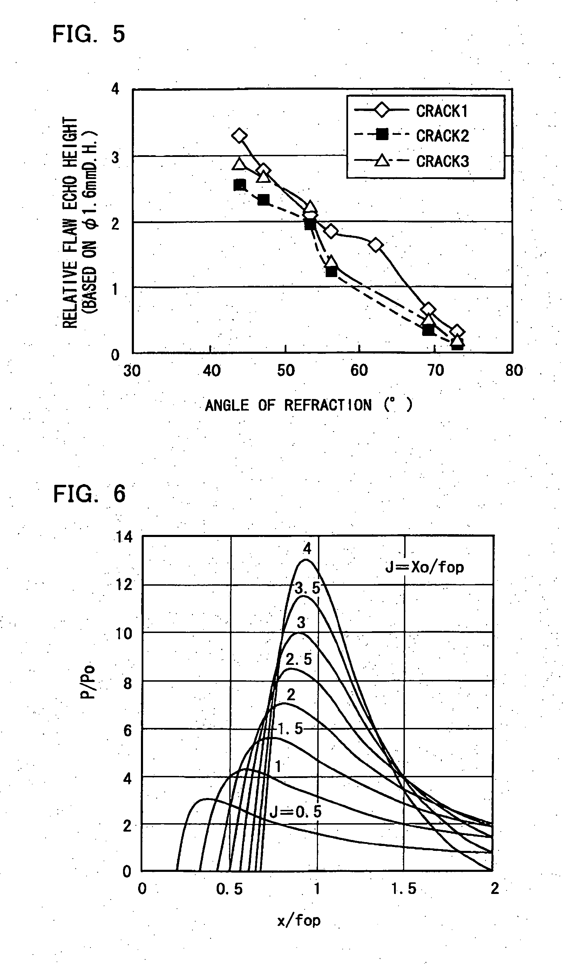

The result of examination is given in Fig. 5. The ordinate in Fig. 5 designates the echo height ratio of the cracks 1 to 3 to the drilled hole (hereinafter referred to as "relative flaw echo height"), and the abscissa designates refraction angles (°) during the flaw detection. If the relative echo height is smaller than 1, the crack is more difficult to detect than a general longitudinal flaw. Referring to Fig. 5, with an ultrasonic beam with a refraction angle from 55° to 70° used for detecting a longitudinal flaw at a UOE steel pipe, the relative flaw echo height was about one time or less, whereas with an ultrasonic beam with a refraction angle of at least 40° and less than 55°, the relative flaw echo height was twice as large or more. It is believed that when the refraction angle was at least 40° and less than 55°, a transverse ultrasonic bream was incident to an inner surface toe crack substantially perpendicularly, and a stronger reflection echo was obtained.

In this way, by the ultrasonic flaw detection method according to the invention, an inner surface toe crack is detected using a probe that outputs a transverse ultrasonic beam with a refraction angle of at least 40° and less than 55°. This improves the capability of detecting inner surface toe cracks.

The refraction angle of the transverse ultrasonic beam is at least 40° and less than 55°, so that a focusing effect higher than the conventional case can be obtained. Therefore, high echo intensity can be obtained for a very small crack such as an inner surface toe crack, so that inner surface toe cracks can easily be detected. This will be described in detail in the following paragraphs.

As shown in Fig. 6, as the focusing coefficient represented by the following Expression (1) is greater, the focusing effect is higher and higher echo intensity results.

$$\text{Focusing coefficient } J = \text{near sound field limit distance } X_0 \text{ / intra-steel focal distance } f_{op} \qquad ...(1)$$

In the abscissa (x/fop) in Fig. 6, x designates the beam path distance. In the ordinate P/Po in Fig. 6, Po is the average sound pressure in the immediate vicinity of the probe, and P is sound pressure on the sound axis (beam central axis). As P/Po is higher, a higher focusing effect results.

During ultrasonic flaw detection, as the refraction angle of the ultrasonic beam is smaller, the near sound field limit distance is greater. Therefore, as the refraction angle is smaller, the resulting focusing effect is higher. When the refraction angle is at least 40° and less than 55°, the refraction angle is smaller than the conventional refraction angle (55° to 70°), and therefore a higher focusing effect than the conventional case can be obtained. Consequently, high echo intensity can be obtained for an inner surface toe crack that is a crack much smaller than a conventional longitudinal flaw.

Table 1 gives focusing coefficients when the inner surfaces of UOE steel pipes having thicknesses of 30 mm and 15 mm were probed with various refraction angles. Note the flaw detection frequency was 4 MHz and it was assumed that the intra-steel focal distance was equal to the beam path distance.

Table 1

| thickness (mm) | angle of incidence (deg) | angle of refraction (de g) | path length | beam path distance (mm) | reduction ratio | near sound field limit distance (mm) | focusing coefficient J |
|---|---|---|---|---|---|---|---|
| 30 | 19.2 | 45.0 | 0.5 skip | 42.4 | 0.75 | 108.4 | 2.6 |
| | 19.2 | 45.0 | 1.5 skip | 127.3 | 0.75 | 108.4 | 0.9 |
| | 23.7 | 60.0 | 0.5 skip | 60.0 | 0.55 | 57.7 | 1.0 |
| | 25.9 | 70.0 | 0.5 skip | 87.7 | 0.38 | 28.0 | 0.3 |

(continued)

| thickness (mm) | angle of incidence (deg) | angle of refraction (de g) | path length | beam path distance (mm) | reduction ratio | near sound field limit distance (mm) | focusing coefficient J |
|---|---|---|---|---|---|---|---|
| 15 | 19.2 | 45.0 | 0.5 skip | 21.2 | 0.75 | 108.4 | 5.1 |
| | 19.2 | 45.0 | 1.5 skip | 63.6 | 0.75 | 108.4 | 1.7 |
| | 23.7 | 60.0 | 0.5 skip | 30.0 | 0.55 | 57.7 | 1.9 |
| | 25.9 | 70.0 | 0.5 skip | 43.9 | 0.38 | 28.0 | 0.6 |

Referring to Table 1, the "path length" in the table is the distance from a toe at the inner surface of a UOE steel pipe to be examined, the "0.5 skip" means 0.5 skip distance, and the "reduction ratio" can be obtained from the following Expression (2):

$$\text{Reduction ratio} = \cos\theta \, / \cos\alpha \qquad \ldots (2)$$

where $\theta$ is the refraction angle (°) of a transverse ultrasonic beam, and $\alpha$ is the angle of incidence (°) of the transverse ultrasonic beam. As the refraction angle is smaller, the reduction ration increases. This increases the apparent oscillator height, and the near sound field limit distance increases as described above.

Referring to Table 1, both in the UOE steel pipe as thick as 30 mm and the UOE steel pipe as thick as 15 mm, the focusing effect was maximized at a refraction angle of 45° that was within the range defined by the invention whereas the focusing effect was low at refraction angles of 60° and 70° that were outside the range defined by the invention.

Furthermore, in consideration of the path length at a refraction angle of 45°, the focusing effect is higher for the 0.5 skip distance than for 1.5 skip distance. Therefore, when an inner surface toe crack is detected by an ultrasonic flaw detection test, a probe is preferably provided in a position corresponding to 0.5 skip distance from the toe of a weld bead at the inside surface of the UOE steel pipe.

Structure of Ultrasonic Flaw Detector

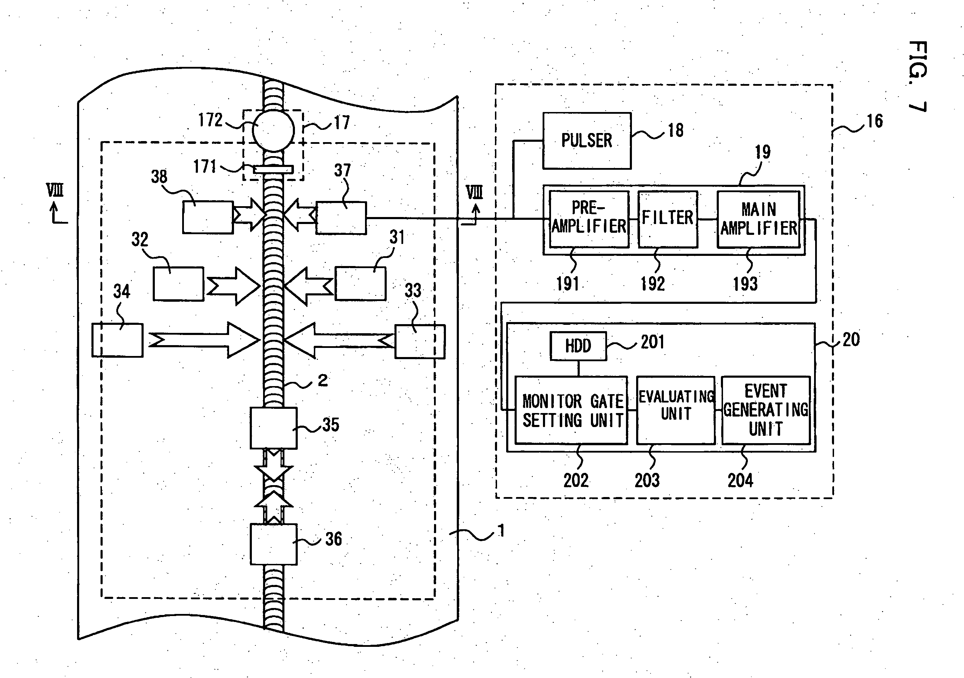

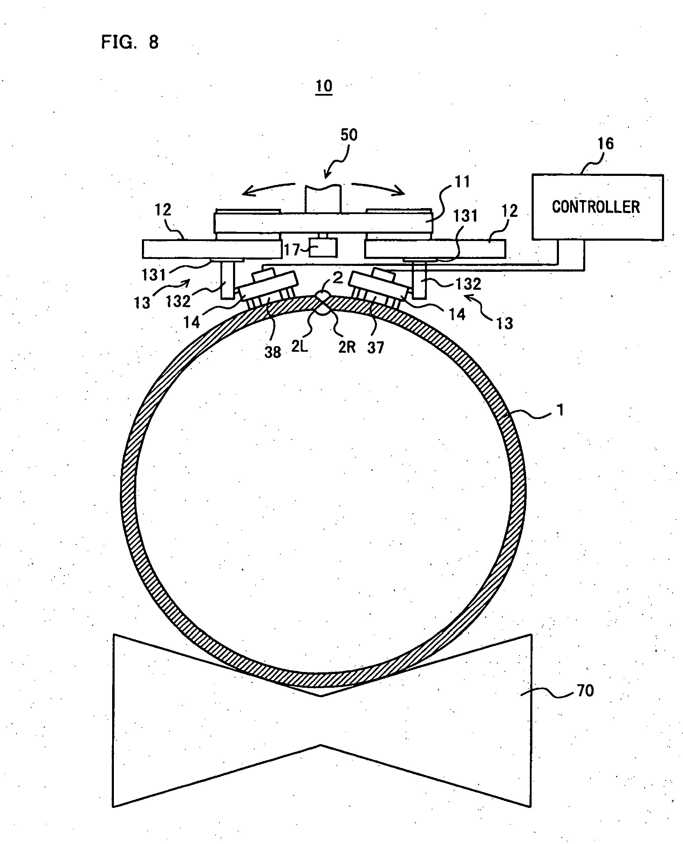

Now, an ultrasonic flaw detector used for the ultrasonic flaw detection method according to the invention will be described. Referring to Figs. 7 and 8, an ultrasonic flaw detector 10 includes conventional angle probes 31 to 34 for detecting longitudinal flaws (hereinafter also referred to as "L-flaws") and conventional angle probes 35 and 36 for detecting transverse flaws (hereinafter also referred to as "T-flaws"). The ultrasonic flaw detector 10 further includes angle probes 37 and 38 for detecting inner surface toe cracks.

A welded steel pipe 1 to be examined is placed on a V-shaped transport roller 70 and subjected to ultrasonic flaw detection as it is transported in the axial direction of the pipe during an ultrasonic flaw detection test. In Fig. 8, the welded steel pipe 1 is provided on the V-shaped transport roller 70, but it may be provided on a V-shaped platform instead of the transport roller 70.

The ultrasonic flaw detector 10 further includes a manipulator 50, a bead detector 17, and a controller 16. The manipulator 50 is a device used to make the angle probes 31 to 38 contact on the outer surface of the welded steel pipe 1 and includes an elevation frame 11, a rail 12, arms 13 and probe holders 14.

The elevation frame 11 and the arm 13 move the angle probes 37 and 38 to a prescribed position. The elevation frame 11 is provided with the bead detector 17 at the center of its lower surface and with the rail 12 at both ends of the lower surface. The elevation frame 11 is elevated/lowered by hydraulic or electric power and makes the probes 37 and 38 contact the outer surface of the welded steel pipe 1.

The elevation frame 11 can pivot in a prescribed range in the circumferential direction of the welded steel pipe 1. In an ultrasonic flaw detection test, the elevation frame 11 pivots so that the bead detector 17 is positioned immediately above the weld bead 2. For example, if the welded steel pipe 1 rotates clockwise from the state shown in Fig. 8 and the weld bead 2 is shifted to the right from the position immediately below the bead detector 17, the elevation frame 11 also pivots clockwise and stops at such a position that the bead detector 17 is immediately above the weld bead 2. In this way, the elevation frame 11 follows the weld bead 2, so that the ultrasonic flaw detector 10 can keep the relative position of the angle probes 37 and 38 with respect to the weld bead 2 unchanged.

The arm 13 includes a horizontal arm member 131 and a vertical arm member 132. The horizontal arm member 131 is moved along the rail 12 by electric power in the horizontal direction. The vertical arm member 132 has a probe holder 14 at the lower end. The vertical arm member 132 moves in the vertical direction. Using the arm 13, the distance (path length) from the toe 2R at the inner surface of the welded steel pipe 1 to the angle probe 37 and the distance (path length) from the toe 2L to the angle probe 38 can be adjusted to 0.5 skip distance or 1.5 skip distance.

The arm 13 that holds each of the probes 37 and 38 is shown in Fig. 8, and the probes 31 to 34 are each held by the same arm (not shown) and the distances between the angle probes 31 to 34 and the weld bead 2 are adjusted by the arms. Similarly, the probes 35 and 36 are held by arms that are not shown.

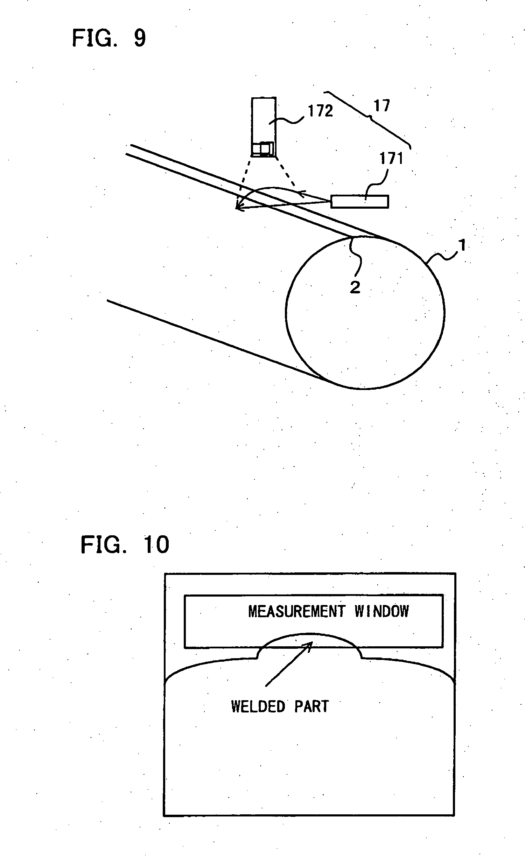

The bead detector 17 detects the central position of the weld bead 2 at the welded steel pipe 1 during an ultrasonic test. The ultrasonic flaw detector 10 makes the manipulator 50 follow the weld bead 2 based on the detection result by the bead detector 17. As shown in Fig. 9, the bead detector 17 includes a laser light source 171 and a CCD camera 172. The laser light source 171 directs laser light to the weld bead 2, and the CCD camera 172 photographs a part of the weld bead 2 irradiated by the laser light. In this way, the ultrasonic flaw detector 10 obtains an image of the cross sectional shape of the outer surface of welded steel pipe 1 as shown in Fig. 10. The controller 16 calculates the central position of the weld bead 2 based on the obtained image. The ultrasonic flaw detector 10 moves the manipulator 50 based on the central position calculated by the controller 16.

The controller 16 determines the positions to dispose the angle probes 31 to 38 and moves the probes to the determined positions using the elevation frame 11, the arms 13 and the like. The controller 16 further controls the angle probes 31 to 38. Now, the structure of the controller 16 used to control the angle probes 37 and 38 among the angle probes 31 to 38 will be described.

Referring to Fig. 7, the controller 16 includes a pulser 18, an amplifier 19, and a flaw evaluator 20. The pulser 18 applies a spike-shaped pulse to the angle probes 37 and 38. The angle probes 37 and 38 receive the pulse from the pulser 18 and propagate a transverse ultrasonic beam from a piezoelectric oscillator inside. The transverse ultrasonic beam (echo) reflected by the inner surface toe crack is received by the angle probes 37 and 38 and converted into an electrical signal (hereinafter referred to as "echo signal"). The echo signal is output to the amplifier 19 from the angle probes 37 and 38.

The amplifier 19 amplifies the echo signal. The amplifier 19 includes a preamplifier 191, a filter 192, and a main amplifier 193. The preamplifier 191 amplifies the received echo signal. The filter 192 removes noise from the echo signal amplified by the preamplifier 191. The main amplifier 193 amplifies the echo signal passed through the filter 192. The echo signal amplified by the amplifier 19 is input to the flaw evaluator 20.

The flaw evaluator 20 includes a hard disk drive (HDD) 201 having monitor gate data registered therein, a monitor gate setting unit 202, a flaw evaluation unit 203, and an event generating unit 204. The monitor gate setting unit 202 sets a monitor gate to the echo signal based on monitor gate data read out from the HDD 201. A method of setting the monitor gate will be described later in the following paragraphs. The evaluating unit 203 determines that there is an inner surface toe crack in a position detected by ultrasonic flaw detection if the echo signal in the set monitor gate exceeds a prescribed threshold in an ultrasonic flaw detection test. When the evaluating unit 203 detects an inner surface toe crack, the event generating unit 204 notifies the operator of the detection or requests a marking unit that is not shown to carry out marking.

Probes

The angle probes 37 and 38 are provided opposed to each other on the same line orthogonal to the weld bead 2. The angle probes 37 and 38 output a transverse ultrasonic beam with a refraction angle of at least 40° and less than 55° and detects an inner surface toe crack by the angle beam flaw detection method.

Similarly, the angle probes 31 and 32 are provided opposed to each other on the same line orthogonal to the weld bead 2 and angle probes 33 and 34 are provided opposed to each other on the same line orthogonal to the weld bead 2. The angle probes 31 to 34 output an ultrasonic beam with a refraction angle from 55° to 70°. The angle probes 31 and 32 detect L-flaws in the vicinity of the inner surface of the welded steel pipe 1. The angle probes 33 and 34 detect L-flaws in the vicinity of the outer surface of the welded steel pipe 1. The angle probes 35 and 36 are provided opposed to each other on the weld bead 2. The angle probes 35 and 36 detect T-flaws.

The angle probes 37 and 38 probe the weld toes 2L and 2R at the inner surface of the welded steel pipe 1 and its vicinity but cannot probe the other region. More specifically, L-flaws at the inner and outer surfaces of the welded steel pipe 1 may not be detected using only the angle probes 37 and 38. By providing the angle probes 31 to 34, the inside of the weld bead 2 can entirely be subjected to flaw detection and L-flaws can be detected.

The angle probes 31 to 34, 37 and 38 each include a wedge and a piezoelectric oscillator provided on the wedge. The piezoelectric oscillator may be a ceramic-based piezoelectric oscillator such as a lead niobate-based porcelain, a lead titanate-based porcelain, and lithium niobate-based porcelain or a PZT-epoxy composite oscillator. The piezoelectric oscillator is preferably a PZT-epoxy composite oscillator. The PZT-epoxy composite oscillator has higher damping performance than a ceramic-based piezoelectric oscillator and therefore near-by echo can be isolated easily, so that a flaw echo and a bead-shaped noise echo can readily be identified.

The angle probes 31 to 34, 37 and 38 are each provided on the outer surface of welded steel pipe 1 through water as a liquid contact medium and direct a transverse ultrasonic beam into the welded steel pipe 1.

The probes 35 and 36 each have a piezoelectric oscillator but do not have a wedge. The probes 35 and 36 are provided on a weld bead 2. The surface shape of the weld bead 2 is less smooth than the outer surface shape of the base. Therefore, the angle probe having a wedge cannot direct a transverse ultrasonic beam stably into the weld bead 2. Without a wedge, the angle wedges 35 and 36 each output a transverse ultrasonic beam from the piezoelectric oscillator through water as a liquid contact medium, so that a stabile transverse ultrasonic beam can be input into the weld bead 2.

Method of Setting Monitor Gate

Now, a method of setting a monitor gate to an echo signal obtained by probing both toes of a weld bead at the inner surface of a welded steel pipe 1 using the probes 37 and 38 will be described.

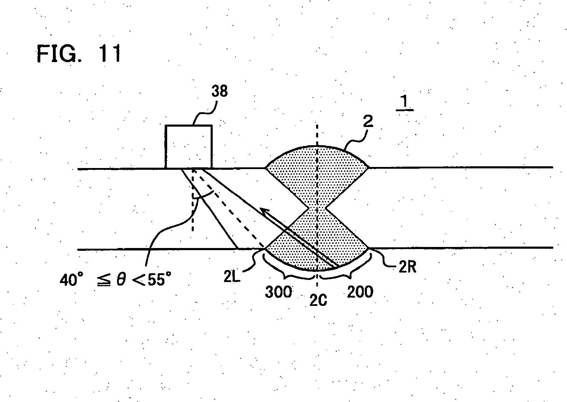

An ultrasonic beam propagates as it spreads at a prescribed directivity angle. Therefore, as shown in Fig. 11, when the weld toe 2L of the weld bead 2 is probed using the angle probe 38, an ultrasonic beam is propagated onto the inner surface 200 between the weld bead central position 2C and the weld toe 2R of the weld bead 2 at the inner surface of the welded steel pipe 1 and sometimes reflected by the inner surface 200. The reflection echo is detected as a bead-shaped noise echo. When the angle probes 37 and 38 having a refraction angle of at least 40° and less than 55°, the intensity of the bead-shaped noise echo is increased, so that the bead-shaped noise echo could be mistaken as an echo of an inner surface toe crack, in other words, over-detection can be conducted.

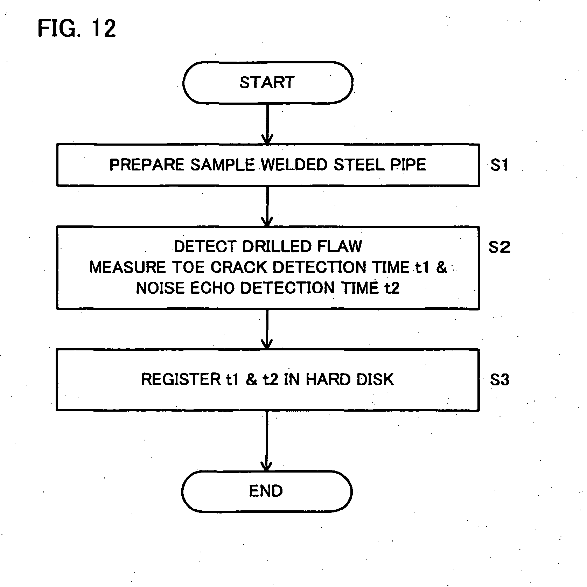

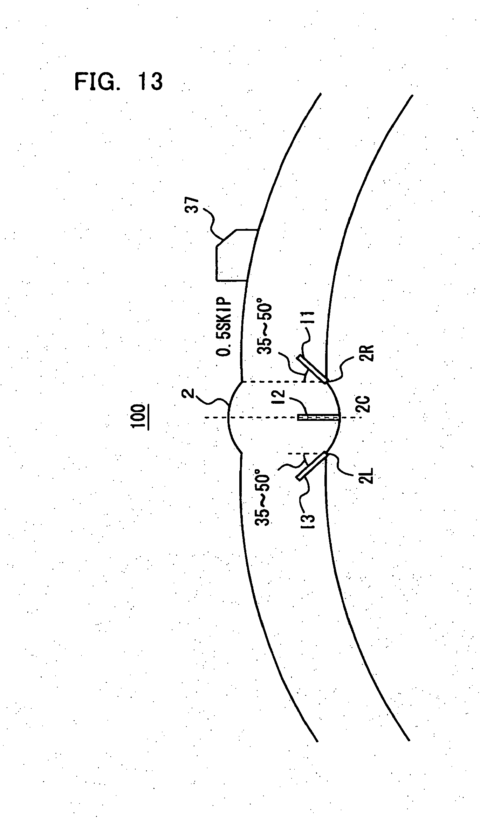

Therefore, according to the invention, a monitor gate is set to an echo signal obtained by ultrasonic flaw detection according to the following method and over-detection of the bead-shaped noise echo is prevented. Referring to Figs 12 and 13, a sample welded steel pipe 100 having the same diameter and the same thickness and of the same steel kind as those of a welded steel pipe 1 to be examined is prepared (S1). Three drilled flaws I1 to I3 are previously formed at a weld bead 2 at a sample welded steel pipe 100. The drilled flaws I1 and I3 are formed in positions where inner surface toe cracks can be generated. More specifically, the drilled flaw I1 is formed from the toe 2R to the inside of the base as it is inclined at 35° to 50° on the opposite side to the welded bead 2 with respect to the radial direction. The drilled flaw I3 is inclined at 35° to 50° on the opposite side to the weld bead 2 with respect to the radial direction from the toe 2L to the inside of the base. The drilled flaw I2 is formed in the radial direction from the central position 2C of the weld bead 2.

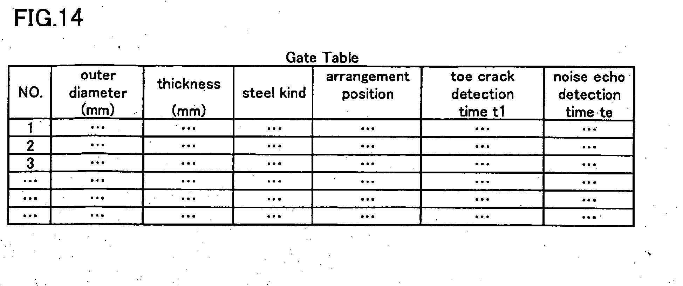

Then, the toes 2R and 2L of the sample welded steel pipe 100 are subjected to flaw detection using the probes 37 and 38. The angle probe 37 is provided at 0.5 skip distance from the toe 2R located nearer to the angle probe 37 among the toes 2R and 2L at the inner surface of the sample welded steel pipe 100. Then, the angle probe 37 detects echoes of the drilled flaws I1 and I2 (S2). At the time, the arrangement position of the probe 37 is slightly adjusted so that the echo intensities of the drilled flaws I1 and I2 are maximized. After the adjustment, the controller 16 registers the arrangement position of the probe 37 in association with the outer diameter (mm), thickness (mm), and the steel kind of the sample welded steel pipe in the gate table shown in Fig. 14. The gate table is stored in the HDD 201 and produced for each angle probe. By the above-described method, the arrangement position of the probe 37 during an ultrasonic test is determined. The ultrasonic flaw detector 10 slightly adjusts the arrangement position of the angle probe 38 similarly to the angle probe 37 and the controller 16 registers the adjusted arrangement position of the probe 38 in the gate table for the probe 38.

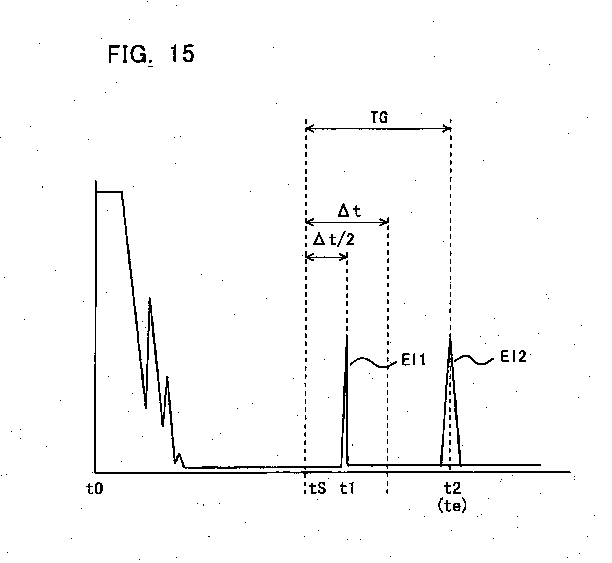

After adjusting the arrangement position, the flaw evaluator 20 detects echo signals of the drilled flaws I1 and I2 received by the angle probe 37. At the time, the monitor gate setting unit 202 in the flaw evaluator 20 does not operate and an echo signal output from the amplifier 19 is input to the evaluation unit 203. Fig. 15 shows the echo signal input to the evaluation unit 203 by A-scope presentation.

Referring to Fig. 15, the evaluation unit 203 obtains the time when the drilled flaw I1 is detected by the angle probe 37 after the angle probe directs a transverse ultrasonic beam into the sample welded steel pipe 100, in other words, time t1 when an echo intensity EI1 exceeding a threshold is detected for the first time (hereinafter referred to as "toe crack detection time t1") after time t0 when the pulser 18 outputs a pulse. The evaluation unit 203 further obtains the time when the angle probe 37 detects the drilled flaw I2, in other words, time t2 when the angle probe 37 detects an second echo intensity EI2 exceeding the threshold after time t0 (hereinafter referred to as "noise echo detection time t2"). The obtained toe crack detection time t1 and the noise echo detection time t2 are registered in association with the outer diameter (mm), the thickness (mm) and the steel kind of the sample welded steel pipe 100 in the gate table for the angle probe 37 (S3). For the probe 38, the toe crack detection time and the noise echo detection time are similarly measured and registered in the gate table for the probe 38 (S3). By the foregoing operation, the monitor gate data (t1 and t2) is registered in the gate table. After the registration, the ultrasonic flaw detection of the sample welded steel pipe 100 ends.

The ultrasonic flaw detector 10 sets a monitor gate using the monitor gate data when the detector carries out an ultrasonic flaw detection test to a welded steel pipe 1 to be examined. Referring to Fig. 15, the monitor gate setting unit 202 in the flaw evaluator 20 refers to the gate table in the HDD 201 and obtains the toe crack detection time t1 and the noise echo detection time t2 corresponding to the outer diameter, the thickness, and the steel kind of the welded steel pipe 1 to be examined. Thereafter, the monitor gate setting unit 202 calculates a gate starting point ts as the starting point of the monitor gate according to the following Expression (3):

$$\text{Gate starting point ts} = t1 - \Delta t/2 \qquad \qquad ...(3)$$

where $\Delta t$ is a value previously set based on follow up error by the manipulator 50 to the weld bead 2 (generally time corresponding to about $\pm 2$ mm). The manipulator 50 follows the weld bead 2 as it pivots based on the information of the bead detector 17 but is shifted from the position immediately above the weld bead by a prescribed margin (generally about $\pm 2$ mm) because of a little time necessary for following. Therefore, the prescribed time $\Delta t$ is previously set based on the prescribed margin and the time is stored in the HDD 201. By the method, the gate starting point ts is set.

Then, the monitor gate setting unit 202 determines the gate terminal point te as the terminal of the monitor gate. The monitor gate setting unit 202 sets the noise echo detection time t2 as the gate terminal point te. The bead-shaped noise echo depends on the shape of the weld bead 2, and therefore it is difficult to specify where it is generated. However, the range in which no such bead-shaped noise echo is generated can be specified.

Referring to Fig. 11, when a transverse ultrasonic beam output from the angle probe 38 is incident to the inner surface of the welded steel pipe 1 substantially perpendicularly, the reflection echo is received by the angle probe 38. The shape of the weld bead 2 is a raised shape whose peak is at the central position 2C. Therefore, the transverse ultrasonic beam from the angle probe 38 is incident to a part of the inner surface 200 substantially perpendicularly and received by the angle probe 38 as the reflection echo. However, the transverse ultrasonic beam is not incident to the inner surface 300 between the toe 2L and the central position 2C of the weld bead in the perpendicular direction and therefore the bead-shaped echo is not generated at least at the inner surface 300. Therefore, if the central position 2C (time t2) of the weld bead 2 specified by the drilled flaw I2 is set as the gate terminal point te, the bead-shaped noise is generated at or after the gate terminal point te, so that the over-detection of the bead-shaped noise can be prevented.

The monitor gate setting unit 202 sets the range from the gate starting point ts to the gate terminal point te set by the above-described method as the monitor gate TG (Time Gate) during a ultrasonic flaw detection test. In this way, the over detection of the bead-shaped noise echo can be prevented and the detection precision of inner surface toe cracks can be improved.

Method of Manufacturing Welded Steel Pipe

Before describing an ultrasonic flaw detection method using the ultrasonic flaw detector 10 having the above-described structure, a method of manufacturing a welded steel pipe to be examined will be described.

To start with, a well-known bending working method such as C-press, U-press, O-press, and roll molding is employed to bend a steel plate and an open pipe is formed. Then, the seam of the thus formed open pipe is welded by a well-known welding method and a welded steel pipe is formed. After the welding, the entire length of the welded steel pipe is expanded in order to improve the size precision of the inner surface of the welded steel pipe.

The expanded welded steel pipe sometimes has an inner surface toe crack caused by the expansion. Therefore, the expanded welded steel pipe is subjected to the ultrasonic flaw detection method according to the embodiment. Hereinafter, the ultrasonic flaw detection method according to the embodiment will be described.

Ultrasonic Flaw Detection Method

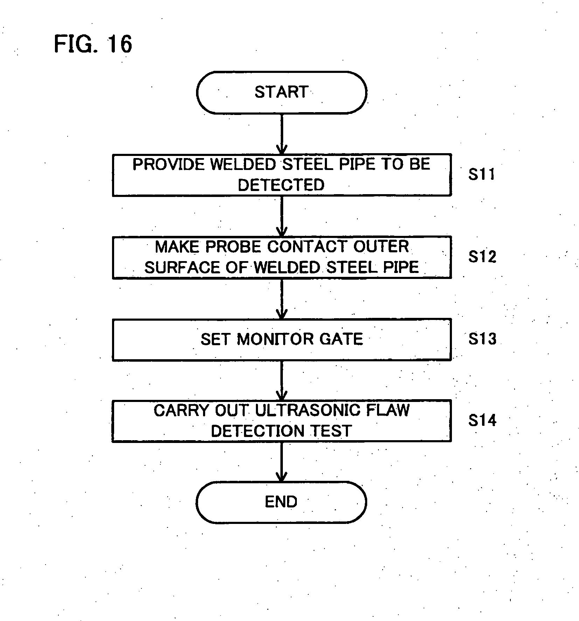

Referring to Fig. 16, an ultrasonic flaw detector 10 including angle probes 37 and 38 is prepared and a welded steel pipe 1 to be examined is provided on a transport roller 70 in the ultrasonic flaw detector 10 (S11). Then, the angle probes 37 and 38 are provided at the outer surface of the welded steel pipe (S12). At the time, the ultrasonic flaw detector 10 refers to gate tables for the angle probes 37 and 38 in the HDD 201 and reads out arrangement position data registered in the record for the same size (outer diameter and thickness) and steel kind as those of the welded steel pipe 1 to be examined. The manipulator 50 is moved to contact the probes 37 and 38 to the read out arrangement positions. In this way, the angle probe 37 is provided so that the propagation direction of a transverse ultrasonic beam in the welded steel pipe 1 is substantially perpendicular to the lengthwise direction of the weld bead 2 and a transverse ultrasonic beam of at least 40° and less than 55° is propagated to the toe 2R having a shorter distance to the angle probe 37 among the toes 2L and 2R of the weld bead 2 at the inner surface of the welded steel pipe 1. Similarly, the angle probe 38 is provided so that a transverse ultrasonic beam of at least 40° and less than 55° is propagated to the toe 2L. Note that the other angle probes 31 to 36 are provided on the outer surface of the welded steel pipe 1.

Now, the evaluating unit 203 sets a monitor gate (S13). The evaluating unit 203 refers to the gate table for the angle probe 37 and reads out the toe crack detection time t1 and the noise echo detection time t2 registered in the record for the same size (outer diameter and thickness) and steel kind as those of the welded steel pipe 1 to be examined. Then, the evaluating unit 203 calculates a starting point ts based on Expression (3) and sets the range from the gate starting point ts and the gate terminal point te (i. e., the noise echo detection time t2) as a monitor gate TG. A monitor gate TG is set for the angle probe 38 in the same manner.

After setting the monitor gate TG, the ultrasonic flaw detector 10 carries out an ultrasonic flaw detection test (S14). The ultrasonic flaw detection is carried out based on the angle beam flaw detection method. During the ultrasonic flaw detection test, the welded steel pipe 1 is transported in the axial direction of the pipe. The ultrasonic flaw detector 10 makes the manipulator 50 follow the weld bead 2 of the welded steel pipe 1 using the bead detector 17 and examines for the presence/absence of an inner surface toe crack. The presence/absence of an inner surface toe crack is determined by the flaw evaluator 20.

The evaluating unit 203 in the flaw evaluator 20 determines whether or not the echo intensity of an echo signal received by the angle probe 37 exceeds a prescribed threshold in the monitor gate TG. As the result of determination, if the echo intensity in the monitor gate TG is less than the prescribed threshold, the evaluating unit 203 determines that there is no inner surface toe crack. On the other hand, if the echo intensity in the monitor gate TG exceeds the threshold, the evaluating unit 203 determines that there is an inner surface toe crack in the probed position. At the time, the event generating unit 204 outputs a warning sound or requests the marking device (not shown) provided in the ultrasonic flaw detector 10 to mark the position where the inner surface toe crack is detected. The flaw evaluator 20 carries out the same determination about an echo signal received by the angle probe 38.

In step S14, the other angle probes 31 to 36 direct a transverse ultrasonic beam and probes the inner and outer surfaces for L-flaws and T-flaws. Therefore, the ultrasonic flaw detector 10 can carry out ultrasonic flaw detection over the entire weld bead 2.

As in the foregoing, the angle probes 37 and 38 can emit a transverse ultrasonic beam with a refraction angle of at least 40° and less than 55° and a transverse ultrasonic beam is incident to the weld toes 2L and 2R from the probes 37 and 38, so that the capability of detecting inner surface toe cracks can be improved. Furthermore, the presence/absence of an inner surface toe crack is determined using the monitor gate TG whose gate start ts and gate terminal point te are determined by the above-described method, so that over detection of bead-shaped noise echoes can be prevented. Using the angle probes 31 to 36, flaws detected by the conventional method such as flaws in the L- and T-directions can also be detected.

Note that the size and steel kind of welded steel pipes are registered in the gate table but only the size may be registered. More specifically, the ultrasonic flaw detector 10 may read out monitor data according to the size of a welded steel pipe and set a monitor gate. The cross sectional shape (such as the outer diameter and thickness) of the sample welded steel pipe 100 does not have to be strictly the same as the size of a welded steel pipe to be examined. Using gate table data based on the sample welded steel pipe 100 with tolerances of about ±10% for the outer diameter and thickness, the welded steel pipe 1 to be examined by the above-described method can be subjected to flaw detection, so that inner surface toe cracks can be detected.

The angle probes 37 and 38 are provided at 0.5 skip distance from the toes 2R and 2L, but the advantage of the invention can be provided to some extent if they are provided at 1.5 skip distance. However, since a higher focusing effect is obtained for the 0.5 skip distance arrangement, the angle probes 37 and 38 are preferably provided at 0.5 skip distance. Note that the angle probes 37 and 38 do not have to be provided strictly in the position corresponding to 0.5 skip distance and the advantage of the invention can be provided for arrangement slightly shifted from the 0.5 skip distance arrangement.

Second example

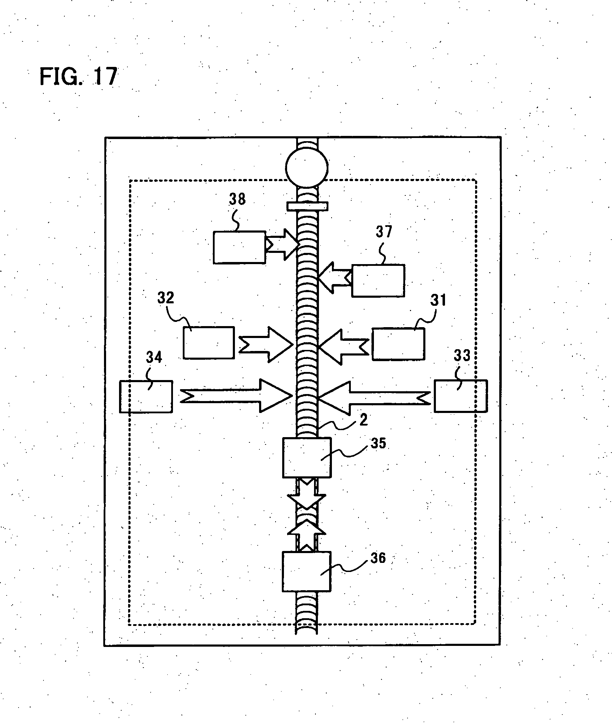

According to the first example, the angle probes 37 and 38 are provided on the same straight line orthogonal to the weld bead 2, but as shown in Fig. 17, the angle probes 37 and 38 may be shifted from each other in the direction of the weld bead 2 rather than arranging them on the same straight line. In this case, ultrasonic beams transmitted from the angle probes 37 and 38 can be prevented from interfering with each other.

Third example

The angle probes are used according to the first and second example, but inner surface toe cracks may be detected using an array probe that can change a refraction angle during a flaw detection test instead of the angle probes 37 and 38.

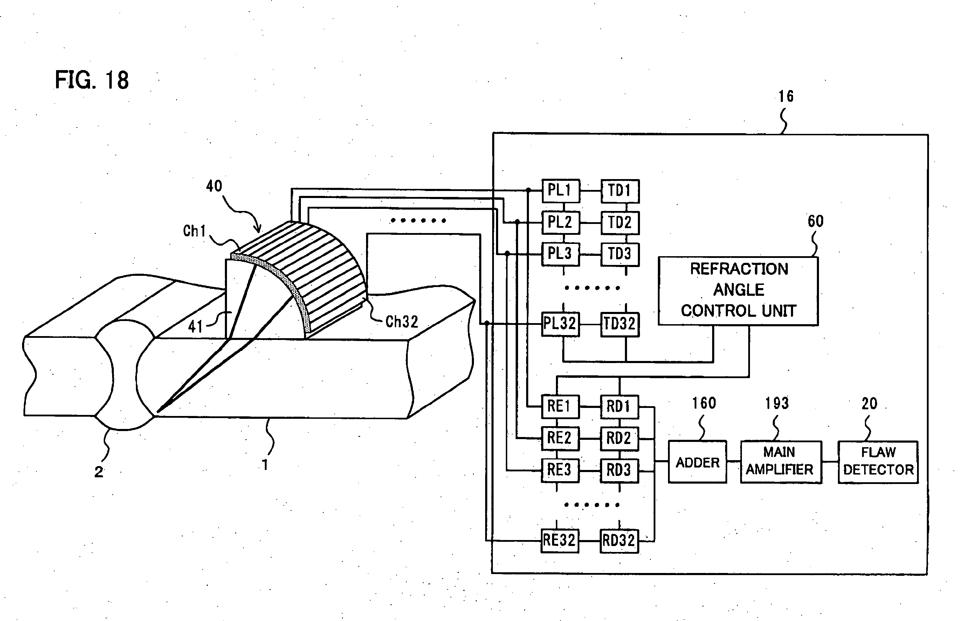

Referring to Fig. 18, the ultrasonic flaw detector according to the embodiment includes an array probe 40 instead of the probe 37. The device also includes a array probe similar to the array probe 40 instead of the probe 38.

The array probe 40 includes a wedge 41 having a sector block shape in cross section and a plurality of ultrasonic oscillators Ch1 to Ch32 arranged along the circumference of the sector on the raised curve surface of the wedge 41. An oscillator Chn (1 to 32) is connected with a pulser PLn (n=1 to 32) and a transmission delay element TDn (n=1 to 32). The pulser PLn outputs a pulse that excites a corresponding oscillator Chn. For example, the pulser PL1 outputs a pulse to the oscillator Ch1 and the pulser PL2 outputs a pulse to the oscillator Ch2.

The refraction angle control unit 60 selects pulsers PL corresponding to a prescribed number of oscillators Ch arranged in a continuous manner. According to the embodiment, it is assumed that pulsers PLk to PLk+15 (k=1 to 17) corresponding to Ch1 to Chk+15 (k=1 to 17) are selected. Here, k is a count value incremented or decremented by the refraction angle control unit 60. After selecting the pulsers PLk to PLk+15, the refraction angle control unit 60 determines time delay for each of the transmission delay elements TDk to TDk+15. In this way, timing for each of the oscillators Chk to Chk+15 to output an ultrasonic wave is determined.

The refraction angle control unit 60 adjusts the timing for each of the oscillators Chk to Chk+15 to output an ultrasonic wave, so that the array probe 40 can change the refraction angle during ultrasonic flaw detection test. Therefore, while the refraction angle of the ultrasonic beam output by the array probe 40 is varied in the range of a least 40° and less than 55° in an ultrasonic flaw detection test, toes at the inner surface of the weld bead 2 can be probed. In this way, if the flaw detection is carried out while changing the refraction angle of the array probe in the range of a least 40° and less than 55°, the capability of detecting an inner surface toe crack with an inclination angle in the rage from 35° to 50° can be improved.

The oscillators Chk to Chk+15 output ultrasonic waves, and ultrasonic beams are output from the array probe 40 to inner surface toes. At the time, the oscillators Chk to Chk+15 each receive a returned echo and convert the echo into an electrical signal. Receivers REk to REk+15 receive signals output from corresponding oscillators Chk to Chk+15. Receiving delay elements RDk to RDk+15 receive signals from corresponding receivers REk to Rek+15 and delay the signals for the same time delays as those of the transmission delay elements TDk to TDk+15. The signals output from the transmission delay elements RDk to RDk+15 are added in an adder 160. The time delay at the time of pulse output and the time delay at the time of echo reception are the same, so that the signals added at the adder 160 represent an accurate flaw detection result. The signal output from the adder 160 is amplified by the main amplifier 193 and output to the flaw evaluator 20. The evaluation method by the flaw evaluator 20 is the same as that in the first embodiment. Note that the array probe attached instead of the probe 38 carries out the same operation.

As in the foregoing, according to the third embodiment, the ultrasonic test is carried out using the array probe 40 while the refraction angle of the ultrasonic beam is swung in the range of at least 40° and less than 55°. Therefore, the capability of detecting inner surface toe cracks can be improved.

Note that instead of a phased array probe having a plurality of oscillators arranged in parallel to one another, an array probe capable of electrically changing the refraction angle of an ultrasonic beam such as a linear array probe may be used and an ultrasonic test may be carried out while an ultrasonic beam is swung in the range of at least 40° and less than 55° for the refraction angle.

INDUSTRIAL APPLICABILITY

The present invention is widely applicable to flaw detection of a UOE steel pipe, particularly to flaw detection of a UOE steel pipe having high strength, a small diameter, and a large thickness. More specifically, the invention is applicable to flaw detection of a UOE steel pipe having a tensile strength of at least 600 MPa, an outer diameter about in the range from 500 mm to 1000 mm and a thickness about in the range from 15 mm to 40 mm.

**Claims**

1. An ultrasonic flaw detection method for detecting, in a UOE steel pipe (1) having a base and a weld bead (2) formed in the axial direction of the pipe, a toe crack (5) extending inside the base from a toe (2L) of the weld bead (2) inside the pipe (1), comprising the steps of:

preparing a first probe (37) that outputs a first transverse ultrasonic beam having a refraction angle of at least 40° and less than 55° when the ultrasonic beam enters from outside the UOE steel pipe;
providing said first probe (37) on the outer surface of said UOE steel pipe (1) so that the propagation direction of said first transverse ultrasonic beam in said UOE steel pipe (1) is approximately perpendicular to the lengthwise direction of said weld bead (2) and said first transverse ultrasonic beam is propagated to a toe (2L) having a shorter distance to said first probe (37) among both toes (2L, 2R) of the weld bead (2) at the inner surface of said UOE steel pipe (1);

outputting said first transverse ultrasonic beam from said provided first probe (37) and subjecting said UOE steel pipe to flaw detection; and

determining the presence/absence of the toe crack (5) based on the result of flaw detection.

2. The ultrasonic flaw detection method according to claim 1, wherein in said providing step, said first probe (37) is provided at 0.5 skip distance from the toe (2L) having a shorter distance to said first probe (37).

3. The ultrasonic flaw detection method according to claim 1, further comprising:

preparing a sample steel pipe (100) having approximately the same cross sectional shape as that of said UOE steel pipe (1) to be examined, a first drilled hole (I1) formed at the weld bead (2) at the inner surface and a second drilled hole (I2) formed in the center of the weld bead (2) at the inner surface;

providing said first probe (37) on the outer surface of said sample steel pipe (100) so that the propagation direction of said first transverse ultrasonic beam in said sample steel pipe (100) is approximately perpendicular to the lengthwise direction of said weld bead (2) and said first transverse ultrasonic beam is incident to the first drilled hole (I1) formed at the toe (2R) having a shorter distance to said first probe (37) among both toes (2L, 2R) of the weld bead (2) at the inner surface of said sample steel pipe (100);

subjecting said sample steel pipe (100) to flaw detection using said provided first probe (37) before subjecting said UOE steel pipe (1) to be examined and obtaining a first time point when an echo of said first drilled hole (I1) is detected after said first probe (37) outputs said first transverse ultrasonic beam and a second time point when an echo of said second drilled hole (I2) is detected; and

when the UOE steel pipe (1) to be examined is subjected to flaw detection, setting a monitor gate having a third time point that is prescribed time different from said first time point as a gate starting point and said second time point as a gate terminal point, wherein in said determining step, when the intensity of an echo in said monitor gate among echoes received by said first probe (37) during the flaw detection of said UOE steel pipe (1) to be examined exceeds a prescribed threshold, it is determined that the toe crack (5) is detected.

4. The ultrasonic flaw detection method according to any one of claims 1 to 3, further comprising:

providing a second probe (38) that outputs a second transverse ultrasonic beam having a refraction angle from 55° to 70° on the outer surface of said UOE steel pipe (1) so that the propagation direction of said second transverse ultrasonic beam is approximately perpendicular to the lengthwise direction of said weld bead (2);

directing said second transverse ultrasonic beam from said second probe (38) into said UOE steel pipe (1) and subjecting said weld bead (2) to flaw detection; and

determining the presence/absence of a longitudinal flaw formed in the lengthwise direction of said weld bead based on the result of flaw detection by said second probe (38).

5. A method of manufacturing a UOE steel pipe (1), comprising the steps of:

bending a steel plate into an open pipe;

welding the seam of said open pipe and forming a welded steel pipe having a weld bead (2) formed in the axial direction of the pipe; and

expanding the entire length of said welded steel pipe to form a UOE steel pipe (1); and

subjecting said UOE steel pipe (1) to the ultrasonic flaw detection method of claim 1.

**Patentansprüche**

1. Ultraschallfehlererfassungsverfahren zum Erkennen eines Fußrisses (5) in einem UOE-Stahlrohr (1) mit in der Axialrichtung des Rohrs gebildetem Fundament und Schweißraupe (2), der sich innerhalb des Fundaments von einem Fuß (2L) der Schweißraupe (2) im Rohr (1) aus erstreckt, umfassend die jeweiligen Schritte des:

Vorbereitens einer ersten Sonde (37), die einen ersten diagonalen Ultraschallstrahl mit einem Brechungswinkel von mindestens 40° und kleiner als 55° aussendet, wenn der Ultraschallstrahl von außerhalb des UOE-Stahlrohrs eintritt;

Vorsehens der ersten Sonde (37) an der Außenfläche des UOE-Stahlrohrs (1), so dass die Ausbreitungsrichtung des ersten diagonalen Ultraschallstrahls im UOE-Stahlrohr (1) ungefähr senkrecht zur Längsrichtung der Schweißraupe (2) ist und so dass der erste diagonale Ultraschallstrahl auf einen Fuß (2L) ausgebreitet wird, der in einer kürzeren Entfernung zur ersten Sonde (37) von beiden Füßen (2L, 2R) der Schweißraupe (2) an der Innenfläche des UOE-Stahlrohrs (1) liegt;

Aussendens des ersten diagonalen Ultraschallstrahls von der vorgesehenen ersten Sonde (37) und Unterziehens des UOE-Stahlrohrs einer Fehlererfassung; und

Bestimmens des Vorhandenseins/Nicht-Vorhandenseins des Fußrisses (5) basierend auf dem Ergebnis der Fehlererkennung.

2. Ultraschallfehlererfassungsverfahren nach Anspruch 1, wobei beim Schritt des Vorsehens die erste Sonde (37) in einer Sprungentfernung von 0,5 vom Fuß (2L) vorgesehen ist, der in einer kürzeren Entfernung zur ersten Sonde (37) liegt.

3. Ultraschallfehlererfassungsverfahren nach Anspruch 1, des Weiteren umfassend:

Vorbereiten eines Probestahlrohrs (100) mit ungefähr derselben Querschnittsform wie die des zu untersuchenden UOE-Stahlrohrs (1), ein erstes an der Schweißraupe (2) an der Innenfläche gebildetes Bohrloch (I1) und ein zweites im Zentrum der Schweißraupe (2) an der Innenfläche gebildetes Bohrloch (I2);

Vorsehen der ersten Sonde (37) an der Außenfläche des Probestahlrohrs (100), so dass die Ausbreitungsrichtung des ersten diagonalen Ultraschallstrahls im Probestahlrohr (100) ungefähr senkrecht zur Längsrichtung der Schweißraupe (2) ist und so dass der erste Ultraschallstrahl in das erste Bohrloch (I1) einfällt, das am Fuß (2R) gebildet ist, der in einer kürzeren Entfernung zur ersten Sonde (37) von beiden Füßen (2L, 2R) der Schweißraupe (2) an der Innenfläche des Probestahlrohrs (100) liegt;

Unterziehen des Probestahlrohrs (100) einer Fehlererfassung unter Nutzung der vorgesehenen ersten Sonde (37) vor dem Unterziehen des zu untersuchenden UOE-Stahlrohrs (1) und Erhalten eines ersten Zeitpunkts, zu dem ein Echo des ersten Bohrlochs (I1) erkannt wird, nachdem die erste Sonde (37) den ersten diagonalen Ultraschallstrahl ausgesendet hat, und eines zweiten Zeitpunkts, zu dem ein Echo des zweiten Bohrlochs (I2) erkannt wird; und

wenn das zu untersuchende UOE-Stahlrohr (1) einer Fehlererfassung unterzogen wird, Einstellen eines Kontrollgates mit einem dritten Zeitpunkt, der zeitverschieden zum ersten Zeitpunkt als Gate-Ausgangspunkt, und vom zweiten Zeitpunkt als Gate-Endpunkt vorgegeben ist, wobei in dem Schritt des Bestimmens bestimmt wird, dass der Fußriss (5) erkannt wurde, wenn die Intensität eines Echos im Kontrollgate unter von der ersten Sonde (37) während der Fehlererfassung des zu untersuchenden UOE-Stahlrohrs (1) empfangener Echos eine vorgeschriebene Schwelle überschreitet.

4. Ultraschallfehlererfassungsverfahren nach einem der Ansprüche 1 bis 3, des Weiteren umfassend:

Vorsehen einer zweiten Sonde (38), die einen zweiten diagonalen Ultraschallstrahl mit einem Brechungswinkel von 55° bis 70° an der Außenfläche des UOE-Stahlrohrs (1) aussendet, so dass die Ausbreitungsrichtung des zweiten diagonalen Ultraschallstrahls ungefähr senkrecht zur Längsrichtung der Schweißraupe (2) ist;

Leiten des zweiten diagonalen Ultraschallstrahls von der zweiten Sonde (38) in das UOE-Stahlrohr (1) und Unterziehen der Schweißraupe (2) einer Fehlererfassung; und

Bestimmen des Vorhandenseins/Nicht-Vorhandenseins eines in der Längsrichtung der Schweißraupe gebildeten Längsfehlers basierend auf dem Ergebnis der Fehlererfassung der zweiten Sonde (38).

5. Herstellungsverfahren für ein UOE-Stahlrohr (1), umfassend die Schritte des:

Biegens einer Stahlplatte zu einem offenen Rohr;

Schweißens der Naht des offenen Rohrs und Bildens eines geschweißten Stahlrohrs mit einer in der Axialrichtung des Rohrs gebildeten Schweißraupe (2); und

Erweiterns der gesamten Länge des geschweißten Stahlrohrs zum Bilden eines UOE-Stahlrohrs (1); und

Unterziehens des UOE-Stahlrohrs (1) dem Ultraschallfehlererfassungsverfahren nach Anspruch 1.

**Revendications**

1. Procédé de détection ultrasonore de défauts pour détecter, dans un tuyau en acier UOE (1) ayant une base et un cordon de soudure (2) formé dans la direction axiale du tuyau, une fissure de jonction (5) s'étendant à l'intérieur de la base depuis un bord (2L) du cordon de soudure (2) à l'intérieur du tuyau (1), comprenant les étapes consistant à :

préparer une première sonde (37) qui émet un premier faisceau ultrasonore transversal ayant un angle de réfraction d'au moins 40° et de moins de 55° lorsque le faisceau ultrasonore entre depuis l'extérieur du tuyau en acier UOE ;

placer ladite première sonde (37) sur la surface externe dudit tuyau en acier UOE (1) de sorte que la direction de propagation dudit premier faisceau ultrasonore transversal dans ledit tuyau en acier UOE (1) est approximativement perpendiculaire à la direction longitudinale dudit cordon de soudure (2) et ledit premier faisceau ultrasonore transversal est propagé vers un bord (2L) ayant une distance plus courte par rapport à ladite première sonde (37) parmi les deux bords (2L, 2R) du cordon de soudure (2) au niveau de la surface interne dudit tuyau en acier UOE (1) ;

émettre ledit premier faisceau ultrasonore transversal depuis ladite première sonde placée (37) et soumettre ledit tuyau en acier UOE à la détection de défauts ; et

déterminer la présence/l'absence de la fissure de jonction (5) sur la base du résultat de la détection de défauts.

2. Procédé de détection ultrasonore de défauts selon la revendication 1, où, lors de ladite étape de placement, ladite première sonde (37) est placée à une distance projetée de 0,5 du bord (2L) ayant une distance plus courte par rapport à ladite première sonde (37).

3. Procédé de détection ultrasonore de défauts selon la revendication 1, comprenant en outre les étapes consistant à :

préparer un tuyau d'échantillonnage en acier (100) ayant approximativement la même forme transversale que celle dudit tuyau en acier UOE (1) à examiner, un premier trou percé (I1) formé à la base du cordon de soudure (2) au niveau de la surface interne et un second trou percé (12) formé au centre du cordon de soudure (2) au niveau de la surface interne ;

placer ladite première sonde (37) sur la surface externe dudit tuyau d'échantillonnage en acier (100), de sorte que la direction de propagation dudit premier faisceau ultrasonore transversal dans ledit tuyau d'échantillonnage en acier (100) est approximativement perpendiculaire à la direction longitudinale dudit cordon de soudure (2) et ledit premier faisceau ultrasonore transversal est incident au premier trou percé (I1) formé au niveau du bord (2R) ayant une distance plus courte par rapport à ladite première sonde (37) parmi les deux bords (2L, 2R) du cordon de soudure (2) au niveau de la surface interne dudit tuyau d'échantillonnage en acier (100) ;

soumettre ledit tuyau d'échantillonnage en acier (100) à la détection de défauts en utilisant ladite première sonde placée (37) avant de soumettre ledit tuyau en acier UOE (1) à l'examen et obtenir un premier point temporel lorsqu'un écho dudit premier trou percé (I1) est détecté après que ladite première sonde (37) a émis ledit premier faisceau ultrasonore transversal et un second point temporel lorsqu'un écho dudit second trou percé (12) est détecté ; et

lorsque le tuyau en acier UOE (1) à examiner est soumis à une détection de défauts, régler une vanne de moniteur ayant un troisième point temporel qui est prescrit différemment temporellement par rapport audit premier point temporel comme point de départ de vanne et audit second point temporel comme point d'arrivée de vanne, où, lors de ladite étape de détermination, lorsque l'intensité d'un écho dans ladite vanne de moniteur parmi les échos reçus par ladite première sonde (37) lors de la détection de défauts dudit tuyau en acier UOE (1) à examiner dépasse un seuil prescrit, il est déterminé que la fissure de jonction (5) est détectée.

4. Procédé de détection ultrasonore de défauts selon l'une quelconque des revendications 1 à 3, comprenant en outre les étapes consistant à :

placer une seconde sonde (38) qui émet un second faisceau ultrasonore transversal ayant un angle de réfraction compris entre 55° et 70° sur la surface externe dudit tuyau en acier UOE (1) de sorte que la direction de propagation dudit second faisceau ultrasonore transversal est approximativement perpendiculaire à la direction longitudinale dudit cordon de soudure (2) ;

diriger ledit second faisceau ultrasonore transversal de ladite seconde sonde (38) à l'intérieur dudit tuyau en acier UOE (1) et soumettre ledit cordon de soudure (2) à une détection de défauts ; et

déterminer la présence/l'absence d'un défaut longitudinal formé dans la direction longitudinale dudit cordon de soudure sur la base du résultat de la détection de défauts par ladite seconde sonde (38).

5. Procédé de fabrication d'un tuyau en acier UOE (1), comprenant les étapes consistant à :

plier une plaque en acier en un tuyau ouvert ;

souder la jointure dudit tuyau ouvert et former un tuyau en acier soudé ayant un cordon de soudure (2) formé dans la direction axiale du tuyau ; et

étendre la longueur totale dudit tuyau en acier soudé pour former un tuyau en acier UOE (1) ; et

soumettre ledit tuyau en acier UOE (1) au procédé de détection ultrasonore de défauts de la revendication 1.

## FIG. 1

## FIG. 2A

## FIG. 2B

FIG. 3

FIG. 4A

FIG. 4B

FIG. 4C

FIG. 5

FIG. 6

FIG. 7

EP 2 031 385 B1

FIG. 8

FIG. 9

FIG. 10

MEASUREMENT WINDOW

WELDED PART

FIG. 11

$40° \leqq \theta < 55°$

# FIG. 12

```
        ( START )
            │
            ▼
┌───────────────────────────────────────┐
│  PREPARE SAMPLE WELDED STEEL PIPE      │  S1
└───────────────────────────────────────┘
            │
            ▼
┌───────────────────────────────────────┐
│         DETECT DRILLED FLAW            │  S2
│  MEASURE TOE CRACK DETECTION TIME t1 & │
│     NOISE ECHO DETECTION TIME t2       │
└───────────────────────────────────────┘
            │
            ▼
┌───────────────────────────────────────┐
│      REGISTER t1 & t2 IN HARD DISK     │  S3
└───────────────────────────────────────┘
            │
            ▼
        ( END )
```

FIG. 13

## FIG.14

Gate Table

| NO. | outer diameter (mm) | thickness (mm) | steel kind | arrangement position | toe crack detection time t1 | noise echo detection time te |
|-----|-----|-----|-----|-----|-----|-----|
| 1 | ... | ... | ... | ... | ... | ... |
| 2 | ... | ... | ... | ... | ... | ... |
| 3 | ... | ... | ... | ... | ... | ... |
| ... | ... | ... | ... | ... | ... | ... |
| ... | ... | ... | ... | ... | ... | ... |
| ... | ... | ... | ... | ... | ... | ... |

FIG. 15

# FIG. 16

```
        ╭─────────────╮
        │    START    │
        ╰──────┬──────╯
               │
               ▼
   ┌─────────────────────────┐
   │ PROVIDE WELDED STEEL     │   S11
   │ PIPE TO BE DETECTED      │
   └────────────┬────────────┘
                │
                ▼
   ┌─────────────────────────┐
   │ MAKE PROBE CONTACT OUTER │   S12
   │ SURFACE OF WELDED STEEL  │
   │ PIPE                     │
   └────────────┬────────────┘
                │
                ▼
   ┌─────────────────────────┐
   │    SET MONITOR GATE      │   S13
   └────────────┬────────────┘
                │
                ▼
   ┌─────────────────────────┐
   │ CARRY OUT ULTRASONIC     │   S14
   │ FLAW DETECTION TEST      │
   └────────────┬────────────┘
                │
                ▼
        ╭─────────────╮
        │     END     │
        ╰─────────────╯
```

FIG. 17

FIG. 18

EP 2 031 385 B1

**EP 2 031 385 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002071648 A
- JP 2003262621 A

- WO 9945378 A

### Non-patent literature cited in the description

- ULTRASONIC FLAW DETECTION METHOD FOR WELDED STEEL PIPES. 22 February 1999, 60-62